# EUROPEAN PATENT SPECIFICATION

(11) **EP 3 344 427 B1**
(45) Date of publication and mention of the grant of the patent: **25.03.2020**
(21) Application number: 16770094.7
(22) Date of filing: 01.09.2016
(51) Int. Cl.: B29C 33/38, B29C 33/40, B29C 45/26, B33Y 80/00, B29C 64/00

(54) **3-D PRINTED MOLD FOR INJECTION MOLDING**
3D-DRUCK-FORM ZUM SPRITZGIESSEN
MOULE IMPRIMÉ 3D POUR MOULAGE PAR INJECTION

(30) Priority: 02.09.2015 US 201562213163 P
(43) Date of publication of application: 11.07.2018
(73) Proprietor: Stratasys Ltd., 7612401 Rehovot (IL)
(72) Inventor: MATZNER, Eynat, 1794000 Doar-Na HaMovil (IL); DIKOVSKY, Daniel, 4076717 Ariel (IL); MELAMED, Ophira, 6081834 Shoham (IL); ZONDER, Lior, 6941415 Tel-Aviv (IL)
(74) Representative: Kramer, Dani
(86) International application number: PCT/IL2016/050961
(87) International publication number: WO 2017/037713

(56) References cited:
- EP-A2- 0 431 924
- WO-A1-97/16274
- WO-A2-2012/072513
- WO-A2-2014/141276
- US-A- 6 013 714
- US-A1- 2013 237 636

## Description

### FIELD AND BACKGROUND OF THE INVENTION

The present invention, in some embodiments thereof, relates to a 3D printed injection mold and methods of printing the same.

The injection molding (IM) process is widely used in industrial manufacturing of parts in all sizes, from small pieces to large components. Injection molded parts are produced by injection of a material, say thermoplastic or thermosetting, into a specifically designed mold, which results in a relatively cheap and fast mass production process. However, production of the mold itself is an expensive and time consuming one-off effort which is one of the major contributors to the final part production costs. Therefore, the injection molding process tends to be used only for parts for which large volume production is required. Small scale production generally does not make use of injection molding because of the constraints associated with the manufacture of the mold.

The IM process can be divided into four steps: plastification, injection, holding, and ejection. Polymer pellets are heated to form a melt which is injected into the cavity of a closed mold. The mold generally consists of at least two parts pressed together by a clamping unit. During the injection step, a pressure, which is counteracted by the clamping unit, is built up and maintained until the material in the cavity of the mold has solidified. Then, the mold opens, the molded plastic part is ejected and the mold is closed again for another production cycle. The mold is thus the centerpiece of the IM process. It is generally made of hardened steel, pre-hardened steel, aluminium, and/or beryllium-copper alloy to better sustain the high pressures and temperatures used during the whole process. The mold material is usually selected based on considerations such as long-term durability, cost and its heat dissipation capacity.

On the other hand, 3D printing or additive manufacturing (AM) approaches are gaining more and more attention in the industrial world. AM is a technology which has been developed and improved during the last two decades and enables the production of highly detailed 3D objects with complex shapes in a process wherein the building material is added layer-by-layer. However, limitations such as a slow printing speed and/or a lack of stability/quality of the final printed parts are the reasons why 3D printing technologies have been usually restricted to low volume production and has not been used in large scale fabrication processes of everyday goods.

In light of the above, the present inventors conceived the idea that 3D printing technologies, especially 3D inkjet printing technologies, could be very attractive in the field of injection molding since single customized molds having complex and detailed configurations could be easily and rapidly produced in this way. The shape of the molds can be easily designed in a CAD software and the molds can be produced in several hours and at low cost via an additive manufacturing technology (as opposed to standard metal molds which are very expensive and take weeks to be produced). Furthermore, fast printing of the mold via additive manufacturing would allow "trial-and-error" processes, whereby fine details of the mold can be optimized "on-site" to reach the best results (contrary to the standard process). Cheap and fast printing of the mold also enables applying the IM process to low volume production and/or production of prototype molds. However, IM molds are required to sustain high temperatures and high pressures and should be functional over a life time of about several thousands of injection cycles. In the standard IM process, the materials used for making a mold are metallic, especially stainless steel, which is not suitable for 3D printing. Metals offer several advantages when producing IM molds, especially due to their high heat conductivity (typically above 50 W/mK), excellent mechanical properties, smooth surfaces, and good stability.

In general, such a combination of properties cannot be matched by polymer materials employed in 3D printing technologies, especially those used in 3D inkjet technologies. Therefore there is a need to overcome the deficiencies of 3D printed molds, which are usually characterized by a low heat resistance, limited toughness, a low thermal conductivity, and a low abrasion resistance.

### SUMMARY OF THE INVENTION

The present embodiments relate to a multi-material mold that forms its own heat sink, and that overall provides the desired properties for use in injection molding. Some of the materials may themselves be composite materials, and heat conduction may be built in to the material structure.

WO 2014/141276 describes polymer-based molds and methods of manufacturing. The method includes depositing two or more layers of a first material having a glass transition temperature (Tg) lower than about 70 °C, in order to form a first portion of the mold and then depositing two or more layers of a second material having a Tg higher than about 80 °C to form a second portion of the mold. The method may further include depositing two or more layers of a material having a Tg lower than about 70 °C forming a third portion of the mold to cover the second portion.

WO97/16274 A1 discloses processes for providing enhanced thermal properties of tooling, particularly metal and metal/ceramic molds, made by solid free form fabrication techniques, such as the three-dimensional printing process, and the tooling made by these processes are disclosed. The methods of enhancing thermal properties include incorporating integral contour coolant channels into the mold, adding surface textures to the coolant channels, creating high thermal conductivity paths between the surfaces and the coolant channels, and creating low thermal inertia regions in the mold.

According to the present invention there is provided a method of constructing a multi-material mold using additive manufacturing comprising:
defining a structure of the mold;
within the structure defining at least two sub-regions,
associating the sub-regions with respective specific materials and printing the sub-regions with the respective associated specific material;
wherein a first of the sub-regions comprises an internal sub-region that allows dissipation of heat accumulating during use of the mold, the associated first sub-region specific material being a heat conductive material, the second of the sub-regions comprising an embedded heat sink sub-region for conducting heat away from the internal sub-region allowing dissipation, the respective second sub-region associated specific material being a relatively non- conductive bulk mold material embedded with relatively high heat-conductive material;
wherein the second sub-region further comprises a heat sink printed with polymeric ink, the polymeric ink forming conductive lines and layers designed to dissipate the heat from the internal mold surface.

In an embodiment, the specific materials comprise filled polymers, and each sub-region may comprise a polymer filled to bestow properties specific to the sub-region, based on a required performance.

In an embodiment, a heat conductivity of the relatively high heat conductive material is between 0.5 - 10 W/mK.

In an embodiment, the heat sink sub-region comprises a heat sink printed with polymeric ink, the polymeric ink forming conductive lines and layers designed to dissipate the heat from the internal mold surface.

In an embodiment, the heat conducting material comprises an ink filled with at least one carbon-based material.

In an embodiment, the carbon-based material comprises any of carbon nanotubes, graphene, nano-diamonds and carbon black.

In an embodiment, the heat conducting material comprises micron sized, sub-micron and/or nano particles.

In an embodiment, the micron sized, sub-micron and/or nano particles comprise any of metal nano etc-particles, ceramic nano etc particles, nano tubes, nano diamonds, and nano oxides.

In an embodiment, the heat conducting material comprises metal particles the metal particles comprising any of silver, copper, titanium and stainless steel.

In an embodiment, the heat conducting material comprises an ink filled with ceramic particles.

In an embodiment, the ceramic particles comprise any of: ceramic nano-particles, ceramic nano-tubes, and ceramic sub-micron particles.

In an embodiment, the ceramic particles comprise any of boron nitride, silicon nitride and alumina.

In an embodiment, the internal heat sink structure comprises a network of lines of thermally conductive material embedded in surrounding mold material.

An embodiment may comprise providing coolant tubes and pumping coolant through the coolant tubes.

An embodiment may comprise defining at least one sealing zone and printing the sealing zone with a flexible material.

An embodiment may further comprise defining a release zone to provide the mold with flexibility to release a formed product from the mold, and printing the release zone with a flexible material.

In an embodiment, the flexible material comprises any of a rubbery material, a rubbery material with an abrasion resistance filler and a rubbery material with a thermally conductive filler.

In an embodiment, the abrasion-resistant polymer comprises a polymer containing oxides.

In an embodiment, the oxides comprise at least any of silica, and alumina. In an embodiment, the abrasion resistant polymer comprises a fluorinated material.

The method may comprise determining a part of the mold suffering from most heat accumulation and printing at least one thermally conductive layer at the part, the thermally conductive layer leading to an array of cooling tubes within the mold.

The method may comprise printing an inner layer with a polymer being both an abrasion resistant and a heat conductive polymer, thereby to allow injection molding using abrasive polymers.

In an embodiment, the polymer being both an abrasion resistant and a heat conductive polymer is a polymer comprising both of a ceramic material filler and a carbon material filler.

The method may comprise printing a rubbery layer over a sealing area of the mold.

In an embodiment, the defining the structure of the mold comprises defining injection fills areas having a length substantially larger than a cross section. The method may further comprise providing the defined injection fill areas with a thermal conductivity being lower than a remainder of the mold.

According to a second aspect of the present invention, there is provided a multi-material mold comprising:
a structure having at least two sub-regions, the sub-regions comprising respective specific materials;
a first of said sub-regions comprising an internal sub-region that allows dissipation of heat accumulating during use of the mold, the associated first sub-region specific material being a heat conductive material;
a second of said sub-regions comprising an external heat sink sub-region for conducting heat away from said internal sub-region allowing dissipation, said associated second sub-region specific material being a relatively non-conductive mold material embedded with lines of relatively heat-conductive material, said second sub-region comprising a heat sink printed with polymeric ink, said polymeric ink forming conductive lines and layers designed to dissipate the heat from the internal mold surface.

The internal sub-region susceptible to heating may comprise at least one thermally conductive layer.

In an embodiment, the heat conducting material comprises an ink filled with at least one carbon-based material.

The mold may comprise additional sealing zones printed with a flexible material.

The mold may comprise one or more release zones to provide the mold with flexibility to release a formed product from the mold, the release zone being printed with a flexible material.

The flexible material may be any of a rubbery material, a rubbery material with an abrasion resistance filler and a rubbery material with a thermally conductive filler.

The abrasion-resistant polymer may comprise a polymer containing oxides.

In an embodiment, the oxides comprise either or both of silica and alumina.

The abrasion resistant polymer may comprise a fluorinated material.

The mold may comprise a thermally conductive layer extending from a part of the mold suffering from most heat accumulation to embedded lines of thermally conductive material, thereby to conduct heat out of the mold.

The mold may comprise an inner layer with a polymer being both an abrasion resistant and a heat conductive polymer, thereby to allow injection molding using abrasive polymers.

In an embodiment, the polymer being both an abrasion resistant and a heat conductive polymer is a polymer comprising both of a ceramic material filler and a carbon material filler.

The mold may comprise a rubbery layer printed over a sealing area.

The structure of the mold may comprise injection fill areas having a length substantially larger than a cross section, the injection fill areas having a thermal conductivity being lower than a remainder of the mold.

Unless otherwise defined, all technical and/or scientific terms used herein have the same meaning as commonly understood by one of ordinary skill in the art to which the invention pertains.

The materials, methods, and examples are illustrative only and are not intended to be necessarily limiting the invention as defined by the scope of the appended claims.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Fig. 1 is a simplified flow chart illustrating a process for designing and printing a mold using additive manufacturing and the kinds of materials available for additive manufacturing, according to embodiments of the present invention;
Fig. 2 is a simplified schematic diagram of a mold manufactured according to the process of FIG. 1;
Fig. 3 is a graph showing effects of different materials on thermal conductivity, against a control indicated by DABS; and
Fig. 4 is a graph of percentage of Boron Nitride against thermal conductivity.

### DESCRIPTION OF SPECIFIC EMBODIMENTS OF THE INVENTION

The present invention, in some embodiments thereof, relates to a 3D printed injection mold and a method of printing the same. A multi-material mold, produced for example by ink jet 3D printing, has materials whose structure and combination may provide heat-sink and other desired properties. Some of the materials may themselves be composite materials, and heat conduction may be built in to the material structure. In some cases the multi-material mold may even improve the mold performance in comparison to the standard steel mold.

The design of the mold and the materials distribution inside the mold may depend on the mold structure, heat distribution, and stress and strain distribution, both of which may be calculated using software, from the structural design, angles and fine features. Software such as "Mold flow" that calculates the behavior of the injected material, including temperatures and forces within the mold, may be used.

The multi material mold may consist of one or more of the following kinds of polymers:
1. A heat conductive polymer in areas that become heated in the mold. Selective use of heat conductive polymer/material, typically a filled polymer, may allow for control of heat conductivity. The expected heat conductivity may be raised from around 0.2 W/mK for standard unimproved ink and polymer to 0.5 - 10 W/mK for the heat conductive ink and polymer. The area of the mold closest to the injection material, typically that area under the most heat stress during molding, may be constructed of a complete layer of heat conducting polymer. Areas further away may have heat conductive polymer embedded in surrounding bulk material, to form heat conduction paths to conduct heat away from the interior of the mold and thus provide the mold with a built-in heat sink;
2. An abrasion resistant polymer in areas susceptible to abrasion;
3. A high toughness and high Tg polymer in areas susceptible to breaking;
4. A high HDT polymer;
5. A polymer printed with internal tubes that can pass coolant. Effective cooling may thus be provided based on the tubes introduced into the structure, a feature which is possible in 3D printing. The tubes may meet with the heat conduction layers; and
6. Use of flexible materials to provide good sealing and release properties. As well as sealing prior to injection, flexible materials allow for removing the formed product from the mold.

Regions within the mold may contain combinations of the above materials. Thus a region that is required both to be structurally resilient and conduct heat may have a bulk of structurally resilient polymer interspersed with layers of heat conducting polymer.

The above properties may be achieved using filled inks. For example heat conductivity can be achieved using inks filled with carbon based materials. Such materials may be for example CNT, graphene, nano-diamonds and carbon black.

Alternatively or additionally, heat conductivity can be achieved using inks containing metal nano-particles. The metals may be for example silver, copper, titanium or stainless steel.

Heat conductivity may also be achieved using inks filled with ceramic nano particles, nano tubes and micron and sub-micron particles. The nano particles and micron and sub-micron particles may be boron nitride, silicon nitride, alumina and the like.

The heat conductive material may be filled with a mixture of fillers, such as metals, ceramic and carbon fillers at the same time, in different ratios and compositions.

To improve abrasion resistance, improved surface qualities including surface smoothness and sealing ability, the inks may be polymers filled with oxides such as silica, alumina, and fluorinated materials, as well as with diamond. For better sealing and part extraction the inks may use rubbery materials, or may be rubbery materials filled with abrasion resistance fillers and thermally conductive fillers. Part extraction may also be assisted by suitable ink modification for easier part release. For example, the ink may be modified with a PTFE type substance to reduce friction. Alternatively one may use silicone or Teflon spray for mold release.

The distribution of the materials within the mold may depend on the mold structure and the heat and stress distribution within the mold. Abrasion resistance may be needed at the interior surfaces of the mold but not necessarily deep within, whereas heat conduction may be needed at the internal surfaces, with heat conduction paths deep within and towards the external surfaces. Structurally strong materials may be arranged to form a strong framework so that the mold can withstand the necessary pressures and the overall material distribution may take into account the fine features of the mold and sharp angles.

The heat sink construction may consist of a thermally conductive layer in the inner layers of the mold that suffer from most heat accumulation and thermal conductive printed lines may lead from the surface by embedded lines or layers to cooling tubes printed into the structure of the mold. Such cooling tubes may be used for water or air cooling, or may use metal inserts for cooling.

The conductive printed lines and layers may transfer the heat from the internal part of the mold to the cooling area and increase the cooling rate of the mold.

The abrasion resistant material may be used when abrasive polymers are injected such as filled polymers. In such a case the inner layer can be filled with both thermally conductive and abrasion resistant fillers such as ceramic and diamond fillers.

The mold design may take into account the need for flow of the thermoplastic within the mold before setting, and the design may involve fine tuning the thermal conductivity to achieve the right cooling effect considering the melt flow of the injected material and the part geometry. Thus by having lower thermal conductivity in long thin areas of the mold it is possible to keep the material flowing for a longer time and ensure good and even filling of the mold by the thermoplastic material.

Herein, the following definitions may apply:
High toughness/impact: at least 90 J/m2
High Tg: at least 65°C
High HDT: at least 85°C

For a better understanding of the present invention and to show how the same may be carried into effect, reference is now made to specific embodiments which are given by way of example.

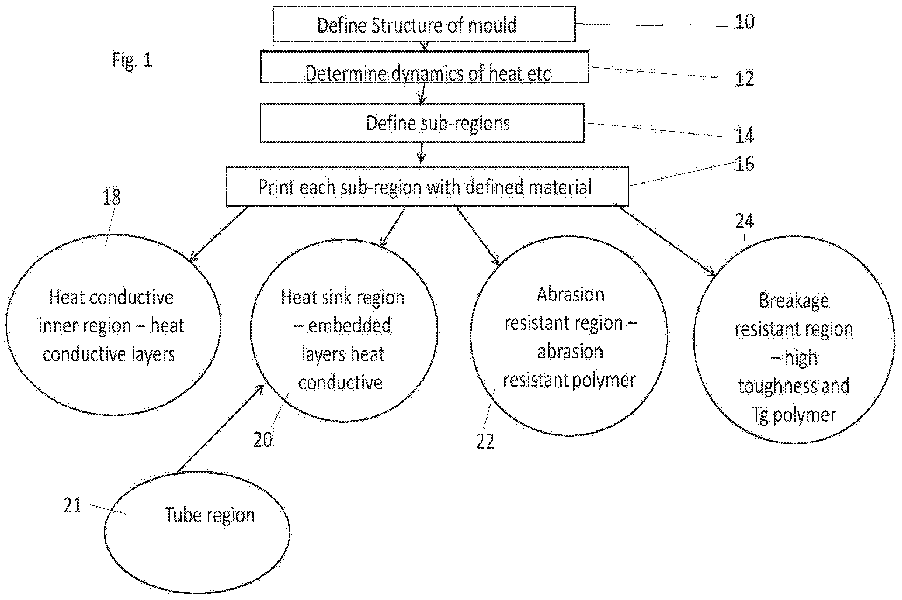

Reference is now made to FIG. 1, which is a simplified flow chart that illustrates a method of designing and constructing a multi-material mold using additive manufacturing, otherwise known as 3D printing.

Box 10 indicates defining a structure of the mold, which is generally based on the part to be molded. As additive manufacturing generally uses polymers rather than metal, attention has to be paid to strength and heat conduction. Firstly, as regards strength, the mold has to be made strong enough to contain the material being injected at the injection pressure. Furthermore there are particular regions such as corner regions which are particularly susceptible to failure as they experience greater pressure. The injected material is not just under pressure but also hot, and heat passage is not smooth but tends to concentrate in certain areas in the mold. Box 12 relates to calculating the dynamics of mechanical pressure, heat flow etc. and how the stresses interact with the shape of the mold, given the distribution of edges of given angles etc. Box 14 relates to defining sub-regions within the mold that may deal with the dynamics.

The sub-regions are defined specifically for the different dynamics and relate to localizing selected materials in the sub-regions to deal with the dynamics. Not all of the sub-regions may be needed in any given mold, and some sub-regions may have multiple tasks. Not all of the sub-regions have to do with the heat and pressure dynamics. Some of the sub-regions may for example have to do with sealing and subsequent release of the mold.

Within the structure of the mold, two or more different sub-regions are defined to provide different conditions for handling the dynamics during the injection molding procedure. Each sub-region contains specific materials that enable the sub-region to handle the conditions of injection molding. Then in box 16 what remains is to print the mold, using the materials for each sub-region.

The following defines an open list (meaning not necessarily complete) of sub-regions that may be included in any particular mold. One sub-region 18, provided in accordance with the current invention, is an internal sub-region, 'internal' meaning in the region of the internal face of the mold that receives the injected material. Such a sub-region allows dissipation of heat from the injection process that accumulates during use of the mold, because the injected material is either hot or under pressure. The specific material is a heat conductive material and is typically provided as a layer within the bulk of the mold. Typically, the inner face of the mold facing the injected material comprises a layer of heat conducting polymer.

A further sub-region 20, provided in accordance with the current invention, is a connective heat sink sub-region that connects to the internal sub-region and the internal heat conducting layers and provides one or more paths conducting heat away from the internal sub-region, allowing dissipation of the heat from the inside of the mold to the outside of the mold. Here the specific material is a relatively non-conductive mold material that provides a bulk, the bulk being embedded with lines or layers of relatively heat-conductive material. The lines or layers may be provided at a selected density as needed for the amount of heat needing to be dissipated. The connective sub-region provides a heat sink built into the structure of the mold. In addition, if greater heat conduction is needed, then additional hollow tubes may be printed into the structure of the bulk and connect with the layers of the connective sub-region, to form a tube region 21. The hollow tubes may have coolant liquid pumped through them to collect heat from the layers and thus further enhance the power of the heat sink. The hollow tubes may connect to an external pump including cooling fins or even cooling fans and if necessary to refrigerating technology. Thus the tube region is typically external.

Sub-region 22 is typically internal and is constructed to be resistant to abrasion. Certain molding materials may be particularly abrasive, and some parts of the mold, particularly at sharp corners, may be particularly susceptible to abrasion. When either or both of these apply then an abrasion-resistant sub-region is defined, and the specific material is an abrasion-resistant polymer, as will be discussed in greater detail below. It is noted that abrasion resistance and heat conduction are not mutually exclusive and the different sub-regions can overlap, with layers of abrasion resistant material and of heat conductive material being adjacent to each other.

Sub-region 24 is a sub-region resistant to breaking under process conditions. Some molding processes may use particularly high pressure and some mold shapes may contain regions that are particularly vulnerable to strain and cracking. In either case a breakage resistant sub-region is defined where necessary and the specific material used may be a high toughness and high Tg polymer, or an ink filled with a filler provided for high toughness and/or high Tg or a digital material.

The heat conducting material may be printed as thermally conductive layers within a bulk mold material. The heat conducting material may be provided as an ink filled with one or more carbon-based materials, such as carbon nanotubes, graphene, nano-diamonds and carbon black. The ink is printed in the normal way to form layers within the mold. Use of nanoparticles is not restricted to carbon, and metal nano-particles may be used as well or in their stead. The metal nano particles may include silver, copper, titanium and stainless steel or any other suitable metal nano-particle. As well as nano-particles, micron and sub-micron particles may be used.

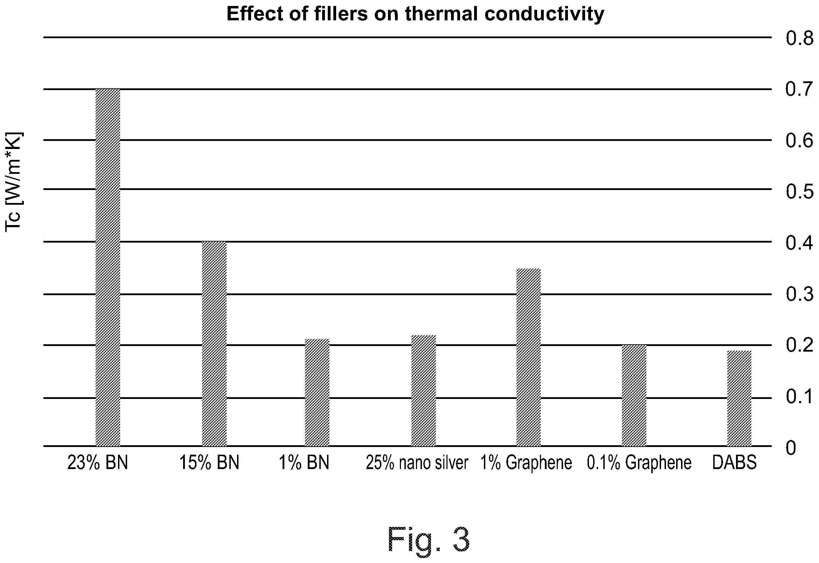

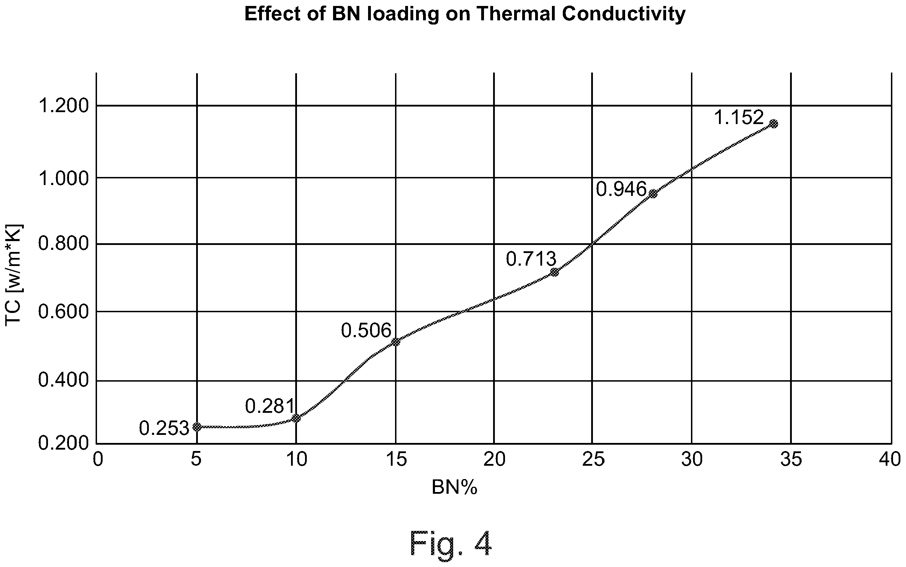

As a further alternative, the heat conducting material may comprise an ink filled with ceramic particles. Suitable ceramic particles may include ceramic micron sized, sub-micron and/or nano-particles, such as ceramic nano-tubes, and ceramic sub-micron particles. Materials for use as ceramic particles of suitable size may include boron nitride, silicon nitride and alumina. Boron nitride is discussed in greater detail with reference to Figs 3 and 4 below.

Particle sizes of the fillers preferably may for example not exceed a few microns, preferably less than 5 microns, to enable jetting by ink jet heads.

The heat conductive material may be printed in the form of conductive traces or lines within the mold bulk from the hot internal surface of the mold to the outside or to the cooling areas to allow heat dissipation from the inside of the mold. The advantages of dissipating the heat are:
1. The polymer material is kept intact for longer as it is not exposed to very high temperatures for a very long time;
2. The effective cooling allows for faster cooling of the injected material and for quicker part ejection; and
3. The heat is more evenly distributed within the mold and does not accumulate in specific sensitive areas, thus also helping to extend the life time of the mold.

As discussed, the method may comprise providing coolant tubes, meaning tubes through which coolant may be pumped during molding operations. The cooling tubes may be printed with a conductive or non-conductive material.

Before injection, the mold may be sealed, and a sealing zone may be defined and printed. The sealing zone may use a flexible material to improve the sealing capabilities. The injected material sets to form the molded product and at some stage has to be extracted from the mold. The mold may therefore be defined with a release zone to provide the mold with flexibility to release the molded product without having to damage the mold. The release zone is typically printed with a flexible material.

For both the sealing and release zones, a suitable flexible material may include one or more of a rubbery material per se, a rubbery material with an abrasion resistance filler and a rubbery material with a thermally conductive filler. The latter two allow for the sealing or release zones to be combined with abrasion resistant or heat conducting sub-zones. The rubbery material may be printed over the sealing area or along the flexible zone.

Returning to the abrasion resistant zone 22, and an abrasion-resistant polymer that includes a polymer containing oxides may be used. The oxides may include for example silica, and alumina.

Alternatively or additionally the abrasion resistant polymer comprises a fluorinated material.

Using the present embodiments, anyone wanting to print a mold may determine where in the mold there are likely to be high levels of heat accumulation. The mold may be printed to include one or more thermally conductive layers at the determined locations. The thermally conductive layers may lead to an array of embedded heat-conducting lines also within the mold to conduct heat from the layers.

Likewise the analysis may indicate higher and lower areas of heat accumulation within the mold, and different densities of thermally conductive layers may be provided accordingly.

As mentioned, abrasion resistance and heat flow may be combined, and the mold may be printed with layers that use a polymer which is both an abrasion resistant and a heat conductive polymer. An example of a polymer being both an abrasion resistant and a heat conductive polymer is a polymer comprising both of a ceramic material filler and a carbon material filler. The use of abrasion resistant regions enables printed molds to be extended to molding using abrasive polymers as the injection material.

As part of the construction of the mold there may be areas which are long and thin and areas which are more bulky. The injected material needs to flow to fill out the thin areas and therefore it is problematic if the material sets before it has finished flowing through the thin area since this prevents filling out the entire shape. Thus the mold may be designed so that the walls of such a thin area, meaning any part of the mold having a length substantially larger than a corresponding cross section have a thermal conductivity which is kept relatively low, so as to allow for filling out of the mold. That is to say the thermal conductivity must be high enough so that the mold does not get damaged but must also be low enough not to cool the plastic until flow into the mold is complete.

Another group of materials that can be used are the so-called digital materials. A digital material is the result of combining two or three PolyJet photopolymers in specific concentrations and microstructures to create a composite material with hybrid characteristics. For example a digital material may combine a translucent Rubber-like material known as Tango Plus with rigid opaque materials known as Vero Magenta and Vero Yellow. The resulting hue varies from yellow to magenta with a range of oranges in between, while the color intensity and opacity fade as the flexibility increases.

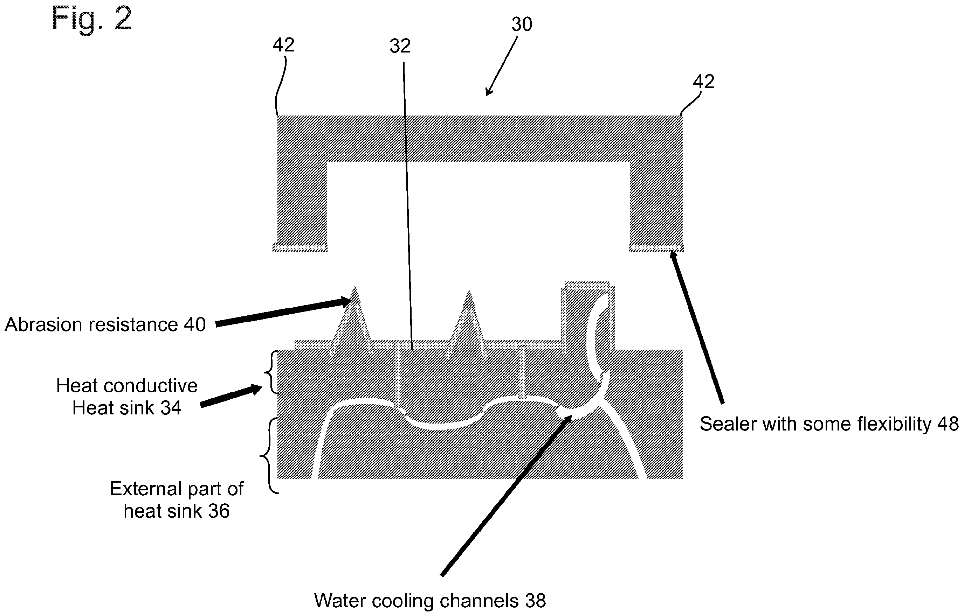

Reference is now made to FIG. 2 which is a schematic diagram, illustrating a multi-material mold manufactured by additive manufacturing. Mold 30 has a structure that includes sub-regions to form a compound mold. The sub-regions each comprise specific materials to give them a desired property. The various sub-regions are as described above. The internal heat resistant region may comprise a layer 32 at the molding surface, and the layer may be printed using a heat conductive polymer. Examples of suitable materials are discussed above. Region 34 provides a heat sink of heat conductive channels embedded in the surrounding mold material. The heat channels provide a path to remove heat from the layer 32. An external part 36 of the heat sink sub-region may contain cooling channels 38, through which water or other cooling fluid can be pumped.

A sub-region resistant to abrasion 40 may be provided at locations in the mold particularly susceptible to abrasion. In the example shown the abrasion region is located at sharp points in the mold. The abrasion resistant region may use an abrasion-resistant polymer.

A sub-region resistant to breaking under molding conditions is provided around sharp corner 42 to prevent breakage, the region using a high toughness and high Tg polymer or a digital material.

A sealing zone is provided where top 44 and bottom 46 mold parts come together. The sealing zone contains one or more layers of rubbery material to form sealer 48, as discussed above.

Reference is now made to Fig. 3, which is a bar chart showing effects of different materials on thermal conductivity, against a control indicated by DABS. Any material whose bar exceeds the control is potentially of interest, although other effects of the material may also be taken into account. Thus 1% graphene has very good thermal conductivity but may render the material brittle and has low reactivity to UV, making it difficult to cure. Boron nitride at 15% and even more so at 23% has good thermal conductivity. At 1%, Boron Nitride just beats the control. 25% nano silver also just beats the control.

**Table 1 - Properties of five different fillers**

| Filler | Max loading (Wt %) | Max TC (W/mK) | Viscosity cps | response to UV curing |
|---|---|---|---|---|
| Graphene | 5 | 0.5 | / | low |
| Silicon Nitride | 15 | 0.3 | 1000 at 25C | ok |
| Nano Silver | 25 | 0.23 | / | ok |
| Boron Nitride 15% | 15 | 0.45 | 45 at 75C | ok |
| Boron Nitride 32% | 32 | 1.1 | / | ok |

Reference is now made to Fig. 4, which is a graph of percentage of Boron Nitride loading against thermal conductivity. The graph is relatively flat below 10% and barely beats the control but then rises steadily up to 34% where the graph ends.

From Fig. 4 it may be concluded that adding Boron Nitride in different concentrations may affect the thermal conductivity. The concentration used may be at least 5% and may take any value between 5% and 34% or beyond 34%. In particular, 10%, 15%, 20%, 25%, and 30% and in-between values may be considered.

The terms "comprises", "comprising", "includes", "including", "having" and their conjugates mean "including but not limited to".

The term "consisting of' means "including and limited to".

As used herein, the singular form "a", "an" and "the" include plural references unless the context clearly dictates otherwise.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method of constructing a multi-material mold (30) using additive manufacturing comprising:
defining a structure of said mold (30);
within said structure defining at least two sub-regions (18,20,22,24,32,34,36,40,42);
associating said sub- regions with respective specific materials and printing said sub-regions with said respective associated specific material;
wherein a first of said sub-regions comprises an internal sub-region (18, 32) that allows dissipation of heat accumulating during use of the mold, the associated first sub-region specific material being a heat conductive material, the second of said sub-regions comprising an embedded heat sink sub-region (20, 34) for conducting heat away from said internal sub-region allowing dissipation, the respective second sub-region associated specific material being a relatively non- conductive bulk mold material embedded with relatively high heat-conductive material;
wherein said second sub-region further comprises a heat sink printed with polymeric ink, said polymeric ink forming conductive lines and layers designed to dissipate the heat from the internal mold surface.

2. The method of claim 1, wherein said sub regions and associated specific materials comprise at least one member of the group consisting of:
a) a sub-region resistant to abrasion, said specific material being an abrasion-resistant polymer;
b) a sub-region (22, 40) resistant to breaking under process conditions, said specific material being a high toughness or high Tg polymer;
c) a sub region (24) of heat resisting material resistant to breakage, wherein said specific material comprises a combination of relatively heat conductive material and material being a high Tg or high HDT polymer;
d) a sub region for sealing or release, said specific material being a flexible material;
e) a sub region containing cooling tubes that are hollow and allow flow of a coolant; and
f) a sub region (21, 36) of a material being at least of said embedded heat sink sub-region specific material and any of a) - e).

3. The method of claim 1 or claim 2, wherein said heat conducting material comprises one member of the group consisting of: an ink filled with at least one carbon-based material, an ink filled with carbon nanotubes, an ink filled with graphene, an ink filled with nano-diamonds, an ink filled with carbon black, micron sized particles, sub-micron sized particles, nano particles, silver particles, copper particles, titanium particles, stainless steel particles, an ink filled with ceramic particles, an ink filled with ceramic nano-particles, an ink filled with ceramic nano-tubes, an ink filled with ceramic sub-micron particles, an ink filled with boron nitride particles, an ink filled with silicon nitride particles, and an ink filled with alumina particles.

4. The method of claim 1, wherein said internal heat sink comprises a network of lines of thermally conductive material embedded in surrounding mold material, further comprising providing coolant tubes and pumping coolant through said coolant tubes.

5. The method of any of claims 1 to 4, further comprising defining:
at least one sealing zone and printing said sealing zone with a flexible material, or
a release zone to provide said mold with flexibility to release a formed product from the mold, and printing said release zone with a flexible material and wherein the flexible material comprises one member of the group consisting of a rubbery material, a rubbery material with an abrasion resistance filler and a rubbery material with a thermally conductive filler.

6. The method of claim 2, wherein said abrasion-resistant polymer comprises a polymer containing oxides, or a polymer containing silica, or a polymer containing alumina, or a fluorinated material.

7. The method of any one of claims 1 to 6, comprising determining a part of said mold suffering from most heat accumulation and printing at least one thermally conductive layer at said part, said thermally conductive layer leading to an array of cooling tubes within said mold.

8. The method of a n y one of claims 1 to 7, comprising printing an inner layer with a polymer being both an abrasion resistant and a heat conductive polymer, or a polymer comprising both a ceramic and a carbon material filler, thereby to allow injection molding using abrasive polymers.

9. The method of any one of the preceding claims, further comprising printing a rubbery layer over a sealing area of said mold.

10. The method of any one of the preceding claims, wherein said defining said structure of said mold comprises defining injection fill areas having a length substantially larger than a cross section, the method comprising providing said defined injection fill areas with a thermal conductivity being lower than a remainder of said mold.

11. A multi-material mold (30) comprising:
a structure having at least two sub-regions (18,20,22,24,32,34,36,40,42), said sub-regions comprising respective specific materials;
a first of said sub-regions comprising an internal sub-region (18, 32) that allows dissipation of heat accumulating during use of the mold, the associated first sub-region specific material being a heat conductive material;
a second of said sub-regions comprising an external heat sink sub-region for conducting heat away from said internal sub-region allowing dissipation, said associated second sub-region specific material being a relatively non-conductive mold material embedded with lines of relatively heat-conductive material, said second sub-region (20, 34) comprising a heat sink printed with polymeric ink, said polymeric ink forming conductive lines and layers designed to dissipate the heat from the internal mold surface.

12. The mold of claim 11, wherein said heat conducting material comprises at least one member of the group consisting of: an ink filled with at least one carbon-based material, an ink filled with carbon nanotubes, an ink filled with graphene, an ink filled with nano-diamonds, an ink filled with carbon black, micron sized particles, sub-micron sized particles, nano particles, metal particles, silver particles, copper particles, titanium particles, stainless steel particles, an ink filled with ceramic particles, an ink filled with ceramic micron particles, an ink filled with ceramic nano-particles, an ink filled with ceramic nano-tubes, an ink filled with ceramic sub-micron particles, an ink filled with boron nitride particles, an ink filled with silicon nitride particles and an ink filled with alumina particles.

13. The mold of claim 11 or claim 12, further comprising at least one sealing zone printed with a flexible material, or a release zone to provide said mold with flexibility to release a formed product from the mold, said release zone being printed with a flexible material, wherein the flexible material comprises one member of the group consisting of a rubbery material, a rubbery material with an abrasion resistance filler, a rubbery material with a thermally conductive filler, an abrasion resistant polymer containing oxides, an abrasion resistant polymer containing silica, an abrasion resistant polymer containing alumina and an abrasion resistant polymer containing a fluorinated material.

14. The mold of any one of claims 11 to 13, further comprising a printed rubbery layer located over a sealing area of said mold.

15. The mold of any one of claims 11 to 14, wherein said second sub group and associated specific material is one member of the group consisting of:
a) a sub-region (22, 40) resistant to abrasion, said specific material being an abrasion- resistant polymer; and
b) a sub-region (24) resistant to breaking under molding conditions, said specific material being a high toughness and high Tg polymer.

## Patentansprüche

1. Verfahren zum Aufbau einer Mehrmaterialform (30) unter Verwendung der additiven Fertigung, wobei das Verfahren Folgendes umfasst:
Definieren einer Struktur der genannten Form (30);
innerhalb der genannten Struktur, Definieren von mindestens zwei Teilbereichen (18, 20, 22, 24, 32, 34, 36, 40, 42) ;
Assoziieren der genannten Teilbereiche mit jeweiligen spezifischen Materialien und Drucken der genannten Teilbereiche mit dem genannten jeweiligen zugeordneten spezifischen Material;
wobei ein erster der genannten Teilbereiche einen inneren Teilbereich (18, 32) aufweist, der die Ableitung der während des Gebrauchs der Form anfallenden Wärme ermöglicht, wobei das zugehörige erste Teilbereichsmaterial ein wärmeleitendes Material ist, wobei der zweite der genannten Teilbereiche einen eingebetteten Wärmesenken-Teilbereich (20, 34) zum Ableiten von Wärme von dem genannten internen Teilbereich umfasst, um eine Ableitung zu ermöglichen, wobei das dem jeweiligen zweiten Teilbereich zugeordnete spezifische Material ein relativ nicht leitfähiges Schüttgut-Formmaterial ist, in das ein relativ hoch wärmeleitfähiges Material eingebettet ist;
wobei der genannte zweite Teilbereich ferner eine Wärmesenke umfasst, die mit polymerer Tinte bedruckt ist, wobei die genannte polymere Tinte, die leitende Linien und Schichten bildet, so ausgelegt ist, dass sie die Wärme von der inneren Formoberfläche ableitet.

2. Verfahren nach Anspruch 1, wobei die genannten Teilbereiche und zugehörigen spezifischen Materialien mindestens ein Mitglied der Gruppe umfassen, die aus Folgendem besteht:
a) einem abriebfesten Teilbereich, wobei das genannte spezifische Material ein abriebfestes Polymer ist;
b) einem Teilbereich (22, 40), der unter Prozessbedingungen bruchsicher ist, wobei das genannte spezifische Material ein Polymer mit einer hohen Zähigkeit oder einem hohen Tg-Wert ist;
c) einem Teilbereich (24) aus hitzebeständigem Material, das bruchsicher ist, wobei das genannte spezifische Material eine Kombination aus relativ wärmeleitendem Material und einem Material, das ein Polymer mit einem hohen Tg-Wert oder einem hohen HDT-Wert ist;
d) einem Teilbereich zum Versiegeln oder Lösen, wobei das genannte spezifische Material ein flexibles Material ist;
e) einem Teilbereich, der hohle Kühlrohre enthält, die das Fließen eines Kühlmittels ermöglichen; und
f) einem Teilbereich (21, 36) aus einem Material, das mindestens aus dem genannten für den eingebetteten Kühlkörper bestimmten Teilbereichsmaterial besteht, und einem der Punkte a) bis e) .

3. Verfahren nach Anspruch 1 oder Anspruch 2, wobei das genannte wärmeleitende Material ein Mitglied der Gruppe umfasst, die aus Folgendem besteht: einer mit mindestens einem Material auf Kohlenstoffbasis gefüllten Tinte, einer mit Kohlenstoffnanoröhren gefüllten Tinte, einer mit Graphen gefüllten Tinte, einer mit Nanodiamanten gefüllten Tinte, einer mit Rußpartikeln in Mikrometergröße gefüllten Tinte, Partikeln mit Submikrongröße, Nanopartikeln, Silberpartikeln, Kupferpartikeln, Titanpartikeln, Edelstahlpartikeln, einer mit Keramikpartikeln gefüllten Tinte, einer mit Keramiknanopartikeln gefüllten Tinte, einer mit keramischen Nanoröhren gefüllten Tinte, einer mit keramischen Submikrometerpartikeln gefüllten Tinte, einer mit Bornitridpartikeln gefüllten Tinte, einer mit Siliziumnitridpartikeln gefüllten Tinte und einer mit Aluminiumoxidpartikeln gefüllten Tinte.

4. Verfahren nach Anspruch 1, wobei der genannte interne Kühlkörper ein Netzwerk von Leitungen aus wärmeleitendem Material umfasst, die in umgebendes Formmaterial eingebettet sind, und das ferner das Bereitstellen von Kühlmittelrohren und Pumpen von Kühlmittel durch die genannten Kühlmittelrohre umfasst.

5. Verfahren nach einem der Ansprüche 1 bis 4, das ferner das Definieren von Folgendem umfasst:
mindestens einer Siegelzone und Bedrucken der genannten Siegelzone mit einem flexiblen Material, oder
einer Trennzone, um die genannte Form mit Flexibilität zu versehen, um ein geformtes Produkt aus der Form zu lösen, und Bedrucken der genannten Trennzone mit einem flexiblen Material und wobei das flexible Material ein Mitglied der Gruppe umfasst, die aus einem kautschukartigen Material, einem kautschukartigen Material mit einem abriebfesten Füllstoff und einem kautschukartigen Material mit einem wärmeleitenden Füllstoff besteht.

6. Verfahren nach Anspruch 2, wobei das genannte abriebfeste Polymer ein Oxid enthaltendes Polymer oder ein Siliciumdioxid enthaltendes Polymer oder ein Aluminiumoxid enthaltendes Polymer oder ein fluoriertes Material umfasst.

7. Verfahren nach einem der Ansprüche 1 bis 6, das das Bestimmen eines Teils der genannten Form, der unter dem größten Wärmestau leidet, und das Aufdrucken mindestens einer wärmeleitenden Schicht auf den genannten Teil umfasst, wobei die genannte wärmeleitende Schicht zu einer Anordnung von Kühlrohren innerhalb der genannten Form führt.

8. Verfahren nach einem der Ansprüche 1 bis 7, das das Aufdrucken einer Innenschicht mit einem Polymer umfasst, das sowohl ein abriebfestes als auch ein wärmeleitendes Polymer ist, oder einem Polymer, das sowohl einen Keramik- als auch einen Kohlenstoffmaterialfüllstoff umfasst, wodurch Spritzgießen unter Verwendung von abrasiven Polymeren ermöglicht wird.

9. Verfahren nach einem der vorhergehenden Ansprüche, das ferner das Aufdrucken einer gummiartigen Schicht auf einen Versiegelungsbereich der genannten Form umfasst.

10. Verfahren nach einem der vorhergehenden Ansprüche, wobei das genannte Definieren der genannten Struktur der genannten Form das Definieren von Einspritzfüllbereichen umfasst, die eine Länge aufweisen, die wesentlich größer als ein Querschnitt ist, wobei das Verfahren das Bereitstellen der genannten definierten Einspritzfüllbereiche mit einer Wärmeleitfähigkeit umfasst, die niedriger ist als ein Rest der genannten Form.

11. Mehrmaterialform (30), die Folgendes umfasst:
eine Struktur mit mindestens zwei Teilbereichen (18, 20, 22, 24, 32, 34, 36, 40, 42), wobei die genannten Teilbereiche jeweilige spezifische Materialien umfassen;
wobei ein erster der genannten Teilbereiche einen inneren Teilbereich (18, 32) umfasst, der die Ableitung der während der Verwendung der Form angesammelten Wärme ermöglicht, wobei das zugehörige erste Teilbereichsmaterial ein wärmeleitendes Material ist;
wobei ein zweiter der genannten Teilbereiche einen externen Wärmesenken-Teilbereich zum Ableiten von Wärme von dem genannten internen Teilbereich umfasst, um eine Ableitung zu ermöglichen, wobei das genannte zugeordnete zweite Teilbereichs-spezifische Material ein relativ nichtleitendes Formmaterial ist, das mit Linien aus relativ wärmeleitendem Material eingebettet ist, wobei der genannte zweite Teilbereich (20, 34) eine Wärmesenke umfasst, die mit polymerer Tinte bedruckt ist, wobei die genannte polymere Tinte leitende Linien und Schichten bildet, die dazu bestimmt sind, die Wärme von der inneren Formoberfläche abzuleiten.

12. Form nach Anspruch 11, wobei das genannte wärmeleitende Material mindestens ein Mitglied der Gruppe umfasst, die aus Folgendem besteht: einer mit mindestens einem Material auf Kohlenstoffbasis gefüllten Tinte, einer mit Kohlenstoffnanoröhren gefüllten Tinte, einer mit Graphen gefüllten Tinte, einer mit Nanodiamanten gefüllten Tinte, einer mit Rußpartikeln in Mikrometergröße gefüllten Tinte, Partikeln mit Submikrongröße, Nanopartikeln, Metallpartikeln, Silberpartikeln, Kupferpartikeln, Titanpartikeln, Edelstahlpartikeln, einer mit Keramikpartikeln gefüllte Tinte, einer mit Keramikmikronpartikeln gefüllte Tinte, einer mit Keramiknanopartikeln gefüllte Tinte, einer mit keramischen Nanoröhren gefüllten Tinte, einer mit keramischen Submikrometerpartikeln gefüllten Tinte, einer mit Bornitridpartikeln gefüllten Tinte, einer mit Siliziumnitridpartikeln gefüllten Tinte und einer mit Aluminiumoxidpartikeln gefüllten Tinte.

13. Form nach Anspruch 11 oder Anspruch 12, die ferner mindestens eine Siegelzone, die mit einem flexiblen Material bedruckt ist, oder eine Trennzone umfasst, um der genannten Form Flexibilität zu verleihen, um ein geformtes Produkt aus der Form zu lösen, wobei die genannte Trennzone mit einem flexiblen Material bedruckt ist, wobei das flexible Material ein Mitglied der Gruppe umfasst, die aus Folgendem besteht: einem kautschukartigen Material, einem kautschukartigen Material mit einem abriebfesten Füllstoff, einem kautschukartigen Material mit einem wärmeleitenden Füllstoff, einem abriebfesten Polymer, das Oxide enthält, einem abriebfesten Polymer, das Siliciumdioxid enthält, einem abriebfesten Polymer, das Aluminiumoxid enthält, und einem abriebfesten Polymer, das ein fluoriertes Material enthält.

14. Form nach einem der Ansprüche 11 bis 13, die ferner eine gedruckte gummiartige Schicht umfasst, die sich über einem Versiegelungsbereich der genannten Form befindet.

15. Form nach einem der Ansprüche 11 bis 14, wobei die genannte zweite Teilgruppe und das zugehörige spezifische Material ein Mitglied der Gruppe ist, die aus Folgendem besteht:
a) einem abriebfesten Teilbereich (22, 40), wobei das genannte spezifische Material ein abriebfestes Polymer ist; und
b) einem Teilbereich (24), der unter Formbedingungen bruchsicher ist, wobei das genannte spezifische Material ein Polymer mit einer hohen Zähigkeit und einem hohen Tg-Wert ist.

## Revendications

1. Procédé de construction d'un moule à matériaux multiples (30) en utilisant la fabrication additive comprenant :
la définition d'une structure dudit moule (30),
au sein de ladite structure la définition d'au moins deux sous-régions (18, 20, 22, 24, 32, 34, 36, 40, 42) ;
l'association desdites sous-régions avec des matériaux spécifiques respectifs et l'impression desdites sous-régions avec ledit matériau spécifique associé respectif ;
dans lequel une première desdites sous-régions comprend une sous-région interne (18, 32) qui permet la dissipation de la chaleur qui s'accumule pendant l'utilisation du moule, le matériau spécifique associé de la première sous-région étant un matériau thermoconducteur, la deuxième desdites sous-régions comprenant une sous-région de dissipation de chaleur à incrustation (20, 34) destinée à éloigner la chaleur par conduction de ladite sous-région interne qui permet la dissipation, le matériau spécifique associé respectif de la deuxième sous-région étant un matériau de moule dans la masse relativement non conducteur incrusté d'un matériau à thermoconduction relativement élevée ;
dans lequel ladite deuxième sous-région comprend en outre un dissipateur de chaleur imprimé avec de l'encre polymérique, ladite encre polymérique formant des lignes conductrices et des couches conçues pour dissiper la chaleur à partir de la surface de moule interne.

2. Procédé selon la revendication 1, dans lequel lesdits sous-régions et matériaux spécifiques associés comprennent au moins un élément du groupe constitué de :
a) une sous-région résistant à l'abrasion, ledit matériau spécifique étant un polymère résistant à l'abrasion ;
b) une sous-région (22, 40) résistant à la rupture dans des conditions de traitement, ledit matériau spécifique étant un polymère à ténacité élevée ou un polymère à haute température de transition vitreuse, Tg ;
c) une sous-région (24) de matériau résistant à la chaleur et à la rupture, dans lequel ledit matériau spécifique comprend une combinaison d'un matériau relativement thermoconducteur et d'un matériau étant un polymère à haute Tg ou à haute température de distorsion à la chaleur, HDT ;
d) une sous-région destinée à sceller ou libérer, ledit matériau spécifique étant un matériau souple ;
e) une sous-région contenant des tubes de refroidissement qui sont creux et permettent l'écoulement d'un réfrigérant ; et
f) une sous-région (21, 36) d'un matériau étant au moins dudit matériau spécifique de la sous-région de dissipation de chaleur à incrustation et l'un quelconque de a) à e) .

3. Procédé selon la revendication 1 ou la revendication 2, dans lequel ledit matériau thermoconducteur comprend un élément du groupe constitué par : une encre remplie d'au moins un matériau à base de carbone, une encre remplie de nanotubes de carbone, une encre remplie de graphène, une encre remplie de nanodiamants, une encre remplie de noir de carbone, des particules de taille micronique, des particules de taille sous-micronique, des nanoparticules, des particules d'argent, des particules de cuivre, des particules de titane, des particules d'acier inoxydable, une encre remplie de particules de céramique, une encre remplie de nanoparticules de céramique, une encre remplie de nanotubes de céramique, une encre remplie de particules sous-microniques de céramique, une encre remplie de particules de nitrure de bore, une encre remplie de particules de nitrure de silicium, et une encre remplie de particules d'alumine.

4. Procédé selon la revendication 1, dans lequel ledit dissipateur de chaleur interne comprend un réseau de lignes de matériau thermoconducteur incrustées dans le matériau de moule environnant, comprenant en outre la fourniture de tubes de réfrigérant et le pompage de réfrigérant à travers lesdits tubes de réfrigérant.

5. Procédé selon l'une quelconque des revendications 1 à 4, comprenant en outre la définition :
d'au moins une zone de scellement et l'impression de ladite zone de scellement avec un matériau souple, ou
d'une zone de libération pour fournir audit moule de la souplesse pour libérer un produit formé du moule, et l'impression de ladite zone de libération avec un matériau souple et dans lequel le matériau souple comprend un ou plusieurs éléments du groupe constitué par un matériau caoutchouteux, un matériau caoutchouteux avec une charge de résistance à l'abrasion et un matériau caoutchouteux avec une charge thermoconductrice.

6. Procédé selon la revendication 2, dans lequel ledit polymère résistant à l'abrasion comprend un polymère contenant des oxydes, ou un polymère contenant de la silice, ou un polymère contenant de l'alumine, ou un matériau fluoré.

7. Procédé selon l'une quelconque des revendications 1 à 6, comprenant la détermination d'une partie dudit moule qui souffre de l'accumulation de chaleur la plus importante et l'impression d'au moins une couche thermoconductrice au niveau de ladite partie, ladite couche thermoconductrice menant à un ensemble de tubes réfrigérants au sein dudit moule.

8. Procédé selon l'une quelconque des revendications 1 à 7, comprenant l'impression d'une couche interne avec un polymère qui est un polymère à la fois résistant à l'abrasion et thermoconducteur, ou un polymère comprenant à la fois une céramique et une charge de matériau carboné, pour permettre ainsi le moulage par injection en utilisant des polymères abrasifs.

9. Procédé selon l'une quelconque des revendications précédentes, comprenant en outre l'impression d'une couche caoutchouteuse par-dessus une zone de scellement dudit moule.

10. Procédé selon l'une quelconque des revendications précédentes, dans lequel ladite définition de ladite structure dudit moule comprend la définition de zones de remplissage par injection ayant une longueur substantiellement supérieure à une coupe transversale, le procédé comprenant la fourniture auxdites zones de remplissage par injection définies d'une conductivité thermique qui est inférieure à celle d'un reste dudit moule.

11. Moule à matériaux multiples (30) comprenant :
une structure ayant au moins deux sous-régions (18, 20, 22, 24, 32, 34, 36, 40, 42), lesdites sous-régions comprenant des matériaux spécifiques respectifs ;
une première desdites sous-régions comprenant une sous-région interne (18, 32) qui permet la dissipation de la chaleur qui s'accumule pendant l'utilisation du moule, le matériau spécifique de la première sous-région associé étant un matériau thermoconducteur ;
une deuxième desdites sous-régions comprenant une sous-région de dissipation de chaleur externe destinée à éloigner la chaleur par conduction de ladite sous-région interne qui permet la dissipation, ledit deuxième matériau spécifique associé de la deuxième région étant un matériau de moule relativement non conducteur incrusté de lignes de matériau relativement thermoconducteur, ladite deuxième sous-région, (20, 34) comprenant un dissipateur de chaleur imprimé avec de l'encre polymérique, ladite encre polymérique formant des lignes conductrices et des couches conçues pour dissiper la chaleur à partir de la surface de moule interne.

12. Moule selon la revendication 11, dans lequel ledit matériau thermoconducteur comprend au moins un élément du groupe constitué par : une encre remplie d'au moins un matériau à base de carbone, une encre remplie de nanotubes de carbone, une encre remplie de graphène, une encre remplie de nanodiamants, une encre remplie de noir de carbone, des particules de taille micronique, des particules de taille sous-micronique, des nanoparticules, des particules métalliques, des particules d'argent, des particules de cuivre, des particules de titane, des particules d'acier inoxydable, une encre remplie de particules de céramique, une encre remplie de particules microniques de céramique, une encre remplie de nanoparticules de céramique, une encre remplie de nanotubes de céramique, une encre remplie de particules sous-microniques de céramique, une encre remplie de particules de nitrure de bore, une encre remplie de particules de nitrure de silicium, et une encre remplie de particules d'alumine.

13. Moule selon la revendication 11 ou la revendication 12, comprenant en outre au moins une zone de scellement imprimée avec un matériau souple, ou une zone de libération pour fournir audit moule de la souplesse pour libérer un produit formé du moule, ladite zone de libération étant imprimée avec un matériau souple, dans lequel le matériau souple comprend un élément du groupe constitué d'un matériau caoutchouteux, d'un matériau caoutchouteux avec une charge de résistance à l'abrasion, un matériau caoutchouteux avec une charge thermoconductrice, un polymère résistant à l'abrasion contenant des oxydes, un polymère résistant à l'abrasion contenant de la silice, un polymère résistant à l'abrasion contenant de l'alumine et un polymère résistant à l'abrasion contenant un matériau fluoré.

14. Moule selon l'une quelconque des revendications 11 à 13, comprenant en outre une couche caoutchouteuse imprimée située par-dessus une zone de scellement dudit moule.

15. Moule selon l'une quelconque des revendications 11 à 14, dans lequel ledit deuxième sous-groupe et le matériau spécifique associé sont un élément du groupe constitué par :
a) une sous-région (22, 40) résistant à l'abrasion, ledit matériau spécifique étant un polymère résistant à l'abrasion ; et
b) une sous-région (24) résistant à la rupture dans des conditions de moulage, ledit matériau spécifique étant un polymère à haute ténacité et à haute Tg.
